**Europäisches Patentamt**

**European Patent Office**

**Office européen des brevets**

(19)

(11) Veröffentlichungsnummer : **0 328 867 B1**

(12) # EUROPÄISCHE PATENTSCHRIFT

(45) Veröffentlichungstag der Patentschrift :
**19.02.92 Patentblatt 92/08**

(51) Int. Cl.$^5$ : **B60J 3/02**

(21) Anmeldenummer : **89100461.6**

(22) Anmeldetag : **12.01.89**

(54) **Sonnenblende für Fahrzeuge.**

(30) Priorität : **13.02.88 DE 3804586**

(43) Veröffentlichungstag der Anmeldung :
**23.08.89 Patentblatt 89/34**

(45) Bekanntmachung des Hinweises auf die
Patenterteilung :
**19.02.92 Patentblatt 92/08**

(84) Benannte Vertragsstaaten :
**ES FR GB IT**

(56) Entgegenhaltungen :
**DE-A- 2 426 398**
**DE-A- 3 324 305**
**DE-B- 1 262 804**
**GB-A- 574 526**

(73) Patentinhaber : **Daimler-Benz**
**Aktiengesellschaft**
**Postfach 600202 Mercedesstrasse 136**
**W-7000 Stuttgart 60 (DE)**

(72) Erfinder : **Baumert, Heinz**
**Ernst-Barlach-Strasse 29/75**
**W-7032 Sindelfingen (DE)**
Erfinder : **Bruhnke, Ulrich, Dipl.-Ing.**
**Lindenstrasse 28**
**W-7031 Ehningen (DE)**
Erfinder : **Greiner, Ferdinand**
**Furtholzstrasse 25**
**W-7031 Aidlingen (DE)**
Erfinder : **Nothacker, Siegfried**
**Hindenburgstrasse 70**
**W-7252 Weil der Stadt (DE)**

EP 0 328 867 B1

Jouve, 18, rue Saint-Denis, 75001 PARIS

## Beschreibung

Die Erfindung befaßt sich mit einer Sonnenblende für Fahrzeuge der im Oberbegriff des Hauptanspruchs angegebenen Art.

Eine derartige Sonnenblende ist der DE-A 24 26 398 bereits als bekannt zu entnehmen, wobei die Ausführungsform mit einer beim Klappvorgang des Sonnenblendenkörpers lagestabilen Lagerachsenlinie zugrundegelegt sind. Diese Ausführungen sind zusätzlich zu ihrer Drehlagerung in den Endbereichen auf eine beidendige axiale Abstützung angewiesen. Zwischen diesen axialen Stützpunkten ist der biegsame Sonnenblendenkörper zur Anpassung an eine Bogenform eines zugeordneten Dachrahmens oberhalb der Windschutzscheibe in einer überwölbten Biegestellung gehalten.

Auf der aus der Überwölbung resultierenden Ausfederkraft beruht auch die Lagestabilität in den beiden vorgesehenen Übertotpunktstellungen des Sonnenblendenkörpers.

Soll der Sonnenblendenkörper bei Bedarf aus seiner überwölbten Ruhestellung in seine Gebrauchsstellung geklappt werden, so muß er im Zuge des Schwenkvorgangs in eine entgegengesetzt überwölbte Stellung überführt werden, wobei es zu einer Stauchbelastung im Mittelbereich des Sonnenblendenkörper kommt, die zwischen den beiden Übertotpunktstellungen Maximalwerte erreicht.

Aufgrund der mit einem Wechsel der Bedienstellung des Sonnenblendenkörpers verbundenen Formänderungarbeit leidet das Erscheinungsbild der Sonnenblende auch bei Verwendung qualitativ hochwertiger Werkstoffe bereits nach kurzer Gebrauchsdauer erheblich.

Zudem erfordert der Wechsel der Bedienstellungen einen erheblichen Kraftaufwand der Bedienperson.

Schließlich bedingt das Funktionsprinzip der bekannten Sonnenblende darüber hinaus, daß vom Sonnenblendenkörper automatisch eine ganz bestimmte Gebrauchsstellung eingenommen wird. Eine individuelle Anpassung der Schwenklage des Sonnenblendenkörpers an die Visierlinie der Bedienperson ist somit nicht möglich.

Aus den vorstehenden Gründen liegt der Erfindung die Aufgabe zugrunde, eine gattungsgemäße Sonnenblende für Fahrzeuge dahingehend weiterzuentwickeln, daß ein Wechsel der Bedienstellungen des Sonnenblendenkörpers mit geringem Kraftaufwand möglich ist, und daß eine individuelle Einstellung des Sonnenblendenkörpers über einen Gebrauchsschwenkbereich vorgenommen werden kann.

Die Lösung dieser Aufgabe ergibt sich aus den kennzeichnenden Merkmalen des Hauptanspruches, wobei der Sonnenblenden körper im Zuge des Klappvorgangs unter Zwangssteuerung durch die gebogene Achse in entgegengesetzte Biegestellungen überführbar ist. Die auf den Sonnenblendenkörper einwirkenden Stauchkräfte sind hierbei relativ gering, da der Sonnenblendenkörper beim Biegewechsel eine gerade, gestreckte Zwischenstellung durchlaufen kann. Dieser Umstand bedingt jedoch eine Änderung der die Achse umschließenden Länge des Sonnenblendenkörpers, der durch eine axiale Verschiebbarkeit desselben auf der Achse Rechnung getragen ist. Ebenso muß die Achse eine auf die Strecklage abgestimmte Überlänge aufweisen.

Aus Gewichtsgründen ist es vorteilhaft, wenn die durchgehende Achse aus einem runden Rohr besteht.

Ein besonders kompakter Aufbau der Sonnenblende ergibt sich, wenn die Achse im Querschnitt des Sonnenblendenkörpers verläuft. Allerdings muß der Sonnenblendenkörper in diesem Fall von einem Schacht durchsetzt sein.

Vorzugsweise ist dieser Schacht als Führungsschacht ausgebildet, wobei er sowohl die Funktion der endseitigen Drehlagerung als auch die Funktion der Zwischenlagerung durch einen entsprechenden Wandverlauf übernehmen kann.

Zur Zwischenlagerung der Achse im Führungsschacht muß die Achse mindestens an einer Lagerstelle auf den Schachtwänden abgestützt sein. Alternativ können über den Zwischenlagerungsbereich verteilt mehrere Lagerstellen vorgesehen sein.

Wegen der nicht rotationssymmetrischen Form des Führungsschachtes ist für diesen eine Schalenbauweise gewählt. Durch eine Anformung der Schachtwände an eine biegeelastische Tragstruktur des Sonnenblendenkörpers kann die Anzahl der Fügevorgänge bei der Fertigung des Sonnenblendenkörpers minimiert werden, wenn für die Tragstruktur bereits eine Fügeverbindung vorgesehen ist.

Alle weitergehenden Merkmale der Anspruchsfassung beziehen sich auf eine Ausführungsform, bei der der Sonnenblendenkörper zusätzlich vor eine der Windschutzscheibe benachbarte Seitenscheibe schwenkbar ist.

Im folgenden ist ein Ausführungsbeispiel der Erfindung anhand einer zeichnerischen Darstellung näher erläutert.

Es zeigen:

Figur 1 einen Vertikalschnitt durch eine in einem Kraftwagen angeordnete Sonnenblende,

Figur 2 eine separate Ansicht eines Sonnenblendenkörpers nach Figur 1,

Figur 3 einen Schnitt gemäß der Linie III-III in Figur 2,

Figur 4 einen Schnitt gemäß der Linie IV-IV in Figur 2,

Figur 5 einen Horizontalschnitt durch die Sonnenblendenanordnung aus Figur 1,

Figur 6 die Lagerung des Sonnenblendenkörpers nach Figur 5 als vergrößerte Einzelheit,

Figur 7 eine Variante zur Rasteinrichtung der Achse aus Figur 6,

Figur 8 ein Strukturmodell der Sonnenblende aus der Sicht des Fahrers in einer Ruhestellung,

Figur 9 das Strukturmodell gemäß Figur 8 in einer Draufsicht,

Figuren 10 und 11 die korrespondierenden Ansichten des Strukturmodells in einer Zwischenstellung des Sonnenblendenkörpers, und die

Figuren 12 und 13 die zu den Ansichten 8 und 9 korrespondierenden Ansichten des Sonnenblendenkörpers in einer Gebrauchsstellung.

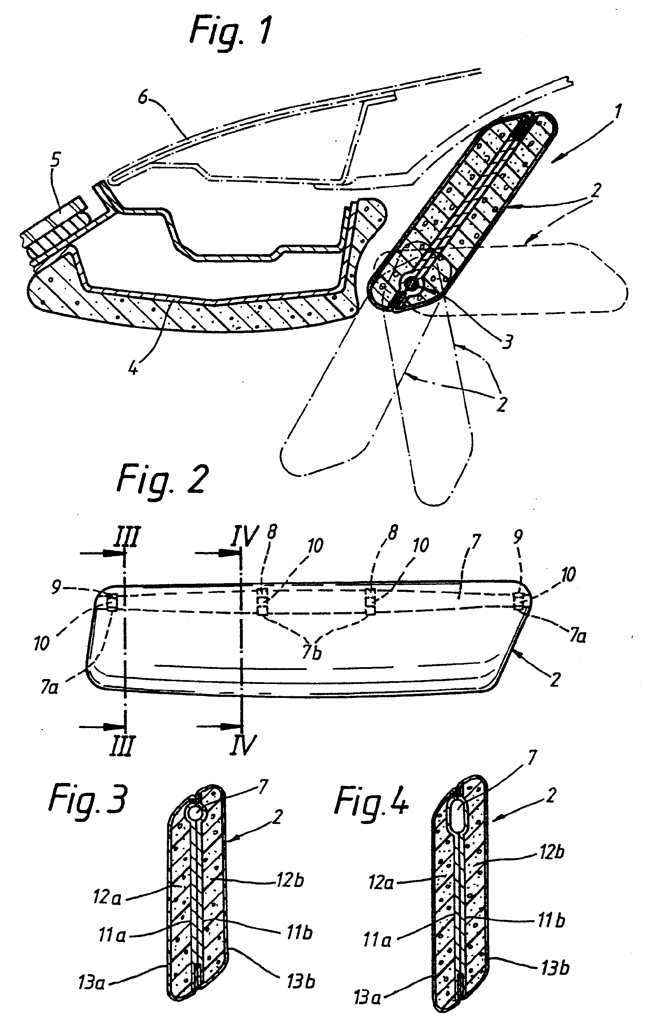

Aus Figur 1 ist die Einbaulage einer Sonnenblende 1 in einem nicht näher dargestellten Cabriolet zu ersehen, die als Hauptteile einen Sonnenblendenkörper 2 und eine Achse 3 umfaßt. Die Achse 3 verläuft in einer horizontalen Ebene hinter einem oberen Rahmenprofil 4 eines Scheibenrahmens einer Windschutzscheibe 5. Aus aerodynamischem Gründen weist die Windschutzscheibe 5 einen flachen Neigungswinkel auf und ist bogenförmig gekrümmt. Zur Anpassung an diese Krümmung ist auch das Rahmenprofil 4 entsprechend gebogen. Um eine optimale Kopffreiheit zu erreichen, liegt die Achse 3 dem Rahmenprofil 4 in einem konstanten Abstand gegenüber, d.h. sie verläuft parallel zur Erstreckungsrichtung des Rahmenprofils 4. Dabei ist der Abstand so bemessen, daß der Sonnenblendenkörper 2 über einen vorgesehenen Schwenkbereich berührungsfrei am Rahmenprofil 4 bzw. einer Verkleidung desselben vorbeigeschwenkt werden kann. Als Schwenkbereich ist ein Mindestschwenkwinkel von etwa 170° vorgesehen, der auch bei geschlossenem Verdeck 6 noch erreicht werden soll. Daher verläuft der im Bereich einer Längskante von der Achse 3 durchsetzte Sonnenblendenkörper 2 im Querschnitt gesehen in seiner Ruhestellung von der Achse 3 ausgehend schräg nach hinten auf den Verdeckhimmel des Verdecks 6 zu, wobei die achsferne Längskante des Sonnenblendenkörpers 2 am Verdeckhimmel anliegt. Diese Ruhestellung bedingt einen minimalen Bauraumbedarf, zumal sich der biegsame Sonnenblendenkörper 2 aufgrund der rahmenprofilfest gehaltenen Achse 3 so durchbiegt, daß seine sichtabgewandte Seite dem Übergangsbereich zwischen dem Rahmenprofil 4 und dem Himmel des Verdecks 6 über die gesamte Länge des Sonnenblendenkörpers 2 in dem dargestellten Abstand gegenüberliegt. Weiterhin im Querschnitt gesehen läßt sich der Sonnenblendenkörper 2 aus der Ruhestellung um einen Winkel von ca. 50° in eine Zwischenstellung schwenken, in der er in der horizontalen Biegeebene der Achse 3 liegt. Aufgrund der an späterer Stelle näher erläuterten Lagerung paßt sich der Sonnenblendenkörper 2 an diese Biegeebene an, indem er eine gerade Strecklage annimmt. Beim Weiterschwenken des Sonnenblendenkörpers 2 gelangt dieser nach einem Winkel von ungefähr 80° in einen hier vorgesehenen Gebrauchsschwenkbereich von etwa 40°. In diesem durch Richtungspfeile kenntlich gemachten Gebrauchsschwenkbereich, in dem der Sonnenblendenkörper 2 entgegengesetzt zur Ruhestellung durchgebogen ist, kann stufenlos jede Zwischenstellung gewählt werden.

Die Lagefixierung des eingestellten Gebrauchswinkels des Sonnenblendenkörpers 2 sowie auch die Lagefixierung in der Ruhestellung erfolgt durch achsseitigen Reibschluß, wobei die Reibungskraft durch die elastische Vorspannung des durchgebogenen Sonnenblendenkörpers 2 aufgebracht wird. Für die Haltekräfte des Sonnenblendenkörpers 2 in der Zwischenstellung ist dessen Widerstand gegen die Biegeverformung maßgebend.

Das selbsttätig lagefixierende Verhalten wird allein über die besondere Art der Lagerung des Sonnenblendenkörpers 2 auf der rohrförmigen Achse 3 erreicht.

Figur 2 zeigt hierzu eine bevorzugte Ausführungsform des Sonnenblendenkörpers 2, bei der vier Lagerstellen für die Achse 3 im Innern des Sonnenblendenkörpers 2 vorgesehen sind. Diese Lagerstellen liegen in einem Führungsschacht 7, der den Sonnenblendenkörper 2 im Nahbereich einer Längskante auf voller Länge durchsetzt. Der lichte Querschnitt des Führungsschachtes 7 weist in beiden Endbereichen des Führungsschachtes 7 einen übereinstimmenden Kreisdurchmesser auf, der geringfügig größer ist als der Durchmesser der Achse 3. Von den kreisförmigen Endbereichen ausgehend verbreitert sich der Führungsschacht 7 zur Mitte des Sonnenblendenkörpers 2 hin zunehmend bis auf eine lichte Breite, die im wesentlichen dem zweifachen Kreisdurchmesser entspricht. Die lichte Höhe des Führungsschachtes 7, die in Dickenrichtung des Sonnenblendenkörpers 2 vorliegt, bleibt jedoch über die Länge des Führungsschachtes 7 unverändert, so daß der lichte Querschnitt des Führungsschachtes 7 im Mittelbereich einer Rechteckform mit halbkreisförmigen Schmalseiten entspricht. Die Breitenzunahme des Führungsschachtes 7 ist so bemessen, daß die halbkreisförmigen Schmalseiten des Führungsschachtes 7 bezogen auf dessen Längsmittelebene spiegelsymmetrisch zueinander verlaufen und in ihrer Krümmung der gebogenen Form der Achse 3 angepaßt sind.

Zur Ausbildung der Lagerstellen ist der Führungsschacht 7 partiell an seinen Enden und beidseitig der Mitte zu einer umlaufenden Ringnut 7a bzw. 7b erweitert. In diese Ringnuten 7a und 7b sind zugeordnete Elastomerringe 8 bzw. 9 eingesetzt, die ein Verformungsverhalten aufweisen, das dem von Moosgummi nahekommt. Alle Elastomerringe 8 und 9 sind mit einer mittigen Durchgangsbohrung 10 versehen, die auf den Durchmesser der Achse 3 abgestimmt ist. Diese Abstimmung ist so vorgenommen, daß die Elastomerringe 8 und 9 nach dem Aufschieben auf die Achse 3 zwar noch auf dem Umfang der Achse 3 verschiebbar oder drehbar sind andererseits jedoch etwa komprimiert werden. Letzteres intensiviert den Formschluß zwischen dem Außenumfang der Elastomerringe 8 bzw. 9 und den zugeordneten Ringnuten 7a und 7b.

Um eine einfache Fertigung und Montage des Sonnenblendenkörpers 2 auf der Achse 3 zu ermöglichen, besteht die tragende Struktur des Sonnenblendenkörpers 2 aus zwei im wesentlichen spiegelbildlichen Halbschalen 11a und 11b aus biegeelastischem Kunststoff, die flächig aufeinanderliegen, und in die die Wände des Führungsschachtes 7 jeweils zur Hälfte eingeformt sind. Diese Halbschalen 11 a und 11b lassen sich somit durch flächiges Fügen auf der Achse 3 anbringen. Dabei sind besonders zeitsparende Fügeverfahren an sich bekannter Art wie Clips- oder ähnliche Spreizverbindungen anwendbar. Des weiteren wirkt es sich vorteilhaft auf die Montagedauer aus, wenn jede Halbschale 11a bzw. 11b bereits vor dem Fügevorgang mit den zugeordneten Umhüllungsbauteilen versehen ist.

Aus den Figuren 3 und 4 ist ein entsprechender Aufbau ersichtlich. Dabei ist jeweils auf der fügeabgewandten Seite der Halbschalen 11a und 11b ein elastomeres Schaumprofil 12a bzw. 12b aufgebracht, das mit einer flexiblen Folie 13a bzw. 13b ummantelt ist.

Somit lassen sich die den Halbschalen 11a und 11b zugeordneten Hälften des Sonnenblendenkörpers 2 jeweils als Formschaumteile üblicher Art preiswert herstellen.

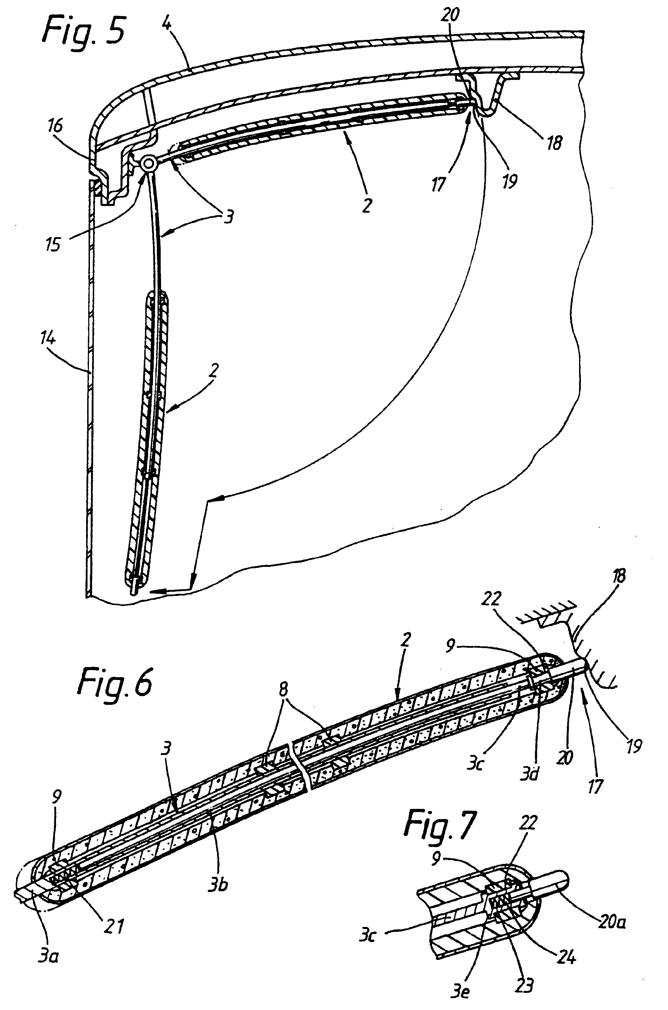

Der Sonnenblendenkörper 2 kann zwar auch auf einer ortsfesten Achse angebracht sein, bei der Achse 3 handelt es sich jedoch um eine an sich bekannte Ausführungsform, die, wie aus Figur 5 zu ersehen ist, wahlweise hinter dem Rahmenprofil 4 oder entlang einer Seitenscheibe 14 eingesetzt werden soll. Hierzu ist ein Ende der Achse 3 mittels eines Scharniergelenks 15 an einer zugeordneten A-Säule 16 angeschlagen. Die geometrische Achse des Scharnier gelenks 15 verläuft dabei lotrecht, so daß die Achse 3 in einer Höhenebene zur Seite bzw. wieder nach vorn geklappt werden kann. Aufgrund der Anlenkung der Achse 3 über das Scharniergelenk 15 ist für das zweite Ende der Achse 3 ein Befestigungspunkt vorgesehen, an dem die Achse 3 in ihrem konstruktionsbedingten Abstand zum Rahmenprofil 4 fixiert werden kann. Damit eine solche Befestigung leicht lösbar ist, wird eine Rasteinrichtung 17 verwendet. Die Rasteinrichtung 17 umfaßt einen fest am Rahmenprofil 4 angebrachten Halter 18 mit einer kalottenförmigen Rastvertiefung 19 sowie einen zur Rastvertiefung 19 gegenstückigen Rastdorn 20, der achsenseitig axial schiebegeführt ist, und der unter einer Federbelastung steht. Vorzugsweise wird der Rastdorn 20 vom freien, aus dem Sonnenblendenkörper 2 herausstehenden Ende der Achse 3 selbst gebildet. Dies gilt insbesondere für den vorliegenden Fall, in dem die Achse 3 selbst teleskopartig ausziehbar ist. Die teleskopierte Achse 3 bietet den Vorzug, daß sie nach dem seitlichen Wegklappen bis in den Nahbereich der hinteren Kante der Seitenscheibe 14 ausgezogen werden kann. Erst dadurch ergibt sich die Möglichkeit eines weitreichenden Blendschutzes vor seitlich einstrahlendem Sonnenlicht. Der nähere Aufbau der teleskopierten Achse 3 ist aus der vergrößerten Schnittdarstellung nach Figur 6 deutlicher zu entnehmen.

Zunächst ist scharnierseitig ein massiver Längsabschnitt 3a vorhanden, der nur wenig in den Sonnenblendenkörper 2 hineinreicht. Der Längsabschnitt 3a geht mit gleichem Durchmesser in einen Rohrabschnitt 3b über, der die Länge des Sonnenblendenkörpers 2 nahezu durchsetzt. In diesem Rohrabschnitt 3b ist eine Rundstange 3c axial schiebegeführt, die in einem aus dem Rohrabschnitt 3b herausstehenden Endabschnitt 3b auf den Durchmesser des Rohrabschnittes 3b verdickt ist. Der Endabschnitt 3d führt aus dem Sonnenblendenkörper 2 heraus und geht daher in den Rastdorn 20 über. Zur Federbelastung des Rastdorns 20 ist in den lichten Querschnitt des Rohrabschnittes 3b eine Schraubendruckfeder 21 eingeschoben, die zwischen dem Längsabschnitt 3a und dem Stirnende der Rundstange 3c axial abgestützt ist. Der lichte Querschnitt des Rohrabschnittes 3b wird somit zur Axialführung der Schraubendruckfeder 21 mitgenutzt.

Um zu erreichen, daß sich der Sonnenblendenkörper 2 gegenüber dem kurzen Endabschnitt 3d nicht verschieben kann, ist in der Breite des Elastomerrings 9 eine Ringnut 22 aus dem Endabschnitt 3d ausgespart, in die der Elastomerring 9 formschlüssig eingreift. Aufgrund der damit verbundenen axialen Abstützung ist sichergestellt, daß Relativbewegungen zwischen dem Sonnenblendenkörper 2 und der Achse 3, sei es im Zuge der Ausziehbewegung der Rundstange 3c aus dem Rohrabschnitt 3b oder im Zuge einer Drehung des Sonnenblendenkörpers 2 auf der Achse 3, in axialer Richtung nur durch Entlanggleiten eines Elastomerrings 9 und der beiden Elastomerringe 8 auf dem Umfang des Rohrabschnitts 3b bzw. dem Längsabschnitt 3a ausgeglichen werden können.

Der Vorschubweg beim Streckvorgang des Sonnenblendenkörpers 2 ist durch eine mittels unterbrochener Linien angedeutete Stellung sichtbar gemacht.

Figur 7 zeigt eine Variante zum Endabschnitt 3d, wobei in einen Endabschnitt 3e selbst eine Schraubendruckfeder 23 integriert ist. Während die Art der axialen und radialen Abstützung des Endabschnitts 3e mit der des Endabschnittes 3d übereinstimmt, also ebenfalls über den Elastomerring 9 erfolgt, weist der Endabschnitt 3e zusätzlich eine zylindrische Bohrung 24 auf, in der die Schraubendruckfeder 23 axial geführt ist. Die Schraubendruckfeder 23 ist über einen zylindrischen Schaft eines Rastdornes 20a vorgespannt, der axial verschiebbar in der Bohrung 24 gelagert ist, und der durch einen nicht dargestellten Anschlag in seiner Ausgangsposition gehalten ist.

Unabhängig davon, ob das Prinzip der Schraubendruckfeder 21 oder das der Schraubendruckfeder 23 Anwendung findet, ergibt sich selbsttätig ein Einrasten der Rasteinrichtung 17, wenn die Achse 3 im eingeschobenen Zustand zum Rahmenprofil 4 hin gedrückt wird. In diesem Fall läuft das Ende des Rastdorns 20 bzw. 20a auf eine schiefe Ebene des Halters 18 auf, wobei die Schraubendruckfeder 21 bzw. 23 etwas weiter einfedert. Gelangt der Rastdorn 20 bzw. 20a zur Rastvertiefung 19 in die fluchtende Endlage, so rastet er unter der Federbelastung in die Rastvertiefung 19 ein und übt anschließend die erwünschten Haltekräfte aus.

In den folgenden Ausführungen ist erläutert, wie der Sonnenblendenkörper 2 in Abhängigkeit von seinem Schwenkwinkel auf der Achse 3 selbsttätig biegeverformt wird. Hierzu findet ein einfaches Strukturmodell Anwendung, an dem das Funktionsprinzip gut zu erkennen ist. Bei diesem Strukturmodell besteht ein Sonnenblendenkörper 2' lediglich aus einer dünnen, ebenen Platte aus elastischem Kunststoff, deren Elastizitätsverhalten etwa dem der gefügten Halbschalen 11a und 11b vergleichbar ist. Demnach läßt sich der Sonnenblendenkörper 2' nur unter dem Einfluß von äußeren Biegekräften aus einer gerade gestreckten Ursprungslage in eine Bogenform bringen. Sobald keine ausreichenden äußeren Biegekräfte mehr vorliegen, federt der Sonnenblendenkörper 2' selbsttätig in seine Strecklage zurück. Anstelle des Führungsschachtes 7 beim Sonnenblendenkörper 2 sind in vergleichbarer Anordnung auf einer Breitseite des Sonnenblendenkörpers 2' drei Lagerschellen 25 aufgeschraubt. Der lichte Querschnitt der endseitigen Lagerschellen 25 entspricht dabei im wesentlichen dem Querschnitt des Führungsschachtes 7 in seinen Endbereichen, und der der Lagerschelle 25a im wesentlichen dem lichten Querschnitt des Führungsschachtes 7 in der Mitte. Die drei Lagerschellen 25 und 25a umschließen ein Achsrohr 3', das in Länge, Durchmesser und Biegeradius der Achse 3 entspricht, und das endseitig starr befestigt ist.

Beim Verschwenken des Sonnenblendenkörpers 2' auf dem Achsrohr 3' in Winkelstellungen, die denen der Sonnenblende 1 entsprechen, läßt sich anhand des Strukturmodells die Abhängigkeit der Sonnenblendenkörperbiegung vom Schwenkwinkel deutlich erkennen.

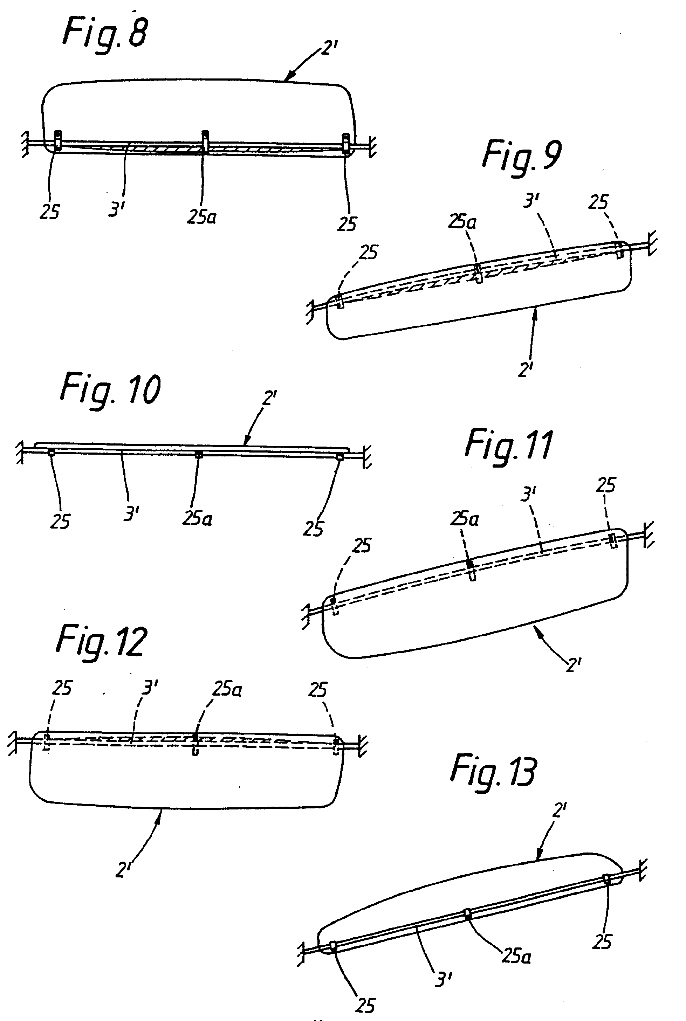

In der Ruhestellung nach den Figuren 8 und 9 ist der Sonnenblendenkörper 2' aufgrund seiner Dreipunktanlenkung biegeverformt, wobei der Umfang des Achsrohrs 3' in einer der Mittellängsachse des Sonnenblendenkörpers 2' zugewandten Endlage an der Lagerschelle 25a anliegt. Die Ausfederspannung des Sonnenblendenkörpers 2' übt dabei auf das Achsrohr 3' Kräfte aus, die quer zur Ebene des Sonnenblendenkörpers 2' gerichtet sind. Da diese Kräfte auf dem Umfang des Achsrohrs 3' abgestützt sind, liegen Reibungskräfte vor, die eine Relativdrehung des Achsrohrs 3' in den Lagerschellen 25 bzw. 25a hemmen. Diese hemmenden Kräfte sind so bemessen, daß sie unter üblichen Betriebsbedingungen ausreichen, den Sonnenblendenkörper 2' zu fixieren. Durch manuellen Zugriff lassen sie sich jedoch problemlos überwinden, so daß ohne großen Kraftaufwand die Gebrauchsstellung herbeigeführt werden kann. Im Zuge des damit verbundenen Schwenkvorgangs des Sonnenblendenkörpers 2' wird zunächst die Zwischenstellung nach den Figuren 10 und 11 durchlaufen, die eine Neutralstellung zwischen zwei einander entgegengesetzten Biegestellungen ist. Die Zwischenstellung liegt in der Höhenebene des gebogenen Achsrohrs 3' vor. Da der Höhenquerschnitt, der von der Lagerschelle 25a vorgegeben ist, mit dem Durchmesser der allein drehlagernden Schellen 25 übereinstimmt, gelangen die Schellen 25 zur Lagerschelle 25a in eine Längsflucht. Hierdurch kann der Sonnenblendenkörper 2' in seine ursprüngliche Strecklage ausfedern. Damit dieser Vorgang ohne ein erneutes Verbiegen des Sonnenblendenkörpers 2' um eine senkrecht zu dessen Ebene verlaufende Biegeachse möglich ist, verschiebt sich die Lagerschelle 25a relativ zum Achsrohr 3' bis das Achsrohr 3' in der entgegengesetzten Endlage an der Lagerschelle 25a anliegt. Dieser relative Quervorschub des Achsrohrs 3' zwischen den Lagerschellen 25 ist durch ein schraffiertes Feld sichtbar gemacht. Die Zwischenstellung des Sonnenblendenkörpers 2' wird ohne eine Stauchbeanspruchung desselben erreicht, wenn zwei der drei Lagerstellen eine Axialverschiebung auf dem Achsrohr 3' zulassen, da der Streckvorgang des Sonnenblendenkörpers 2' mit einer Vergrößerung der Lagerlänge verbunden ist.

Beim Weiterschwenken des Sonnenblendenkörpers 2' aus der Zwischenstellung in den Gebrauchsschwenkbereich, von dem die Figuren 12 und 13 eine Stellung zeigen, wird der Sonnenblendenkörper 2' über seine Anlenkung entgegengesetzt zur Ruhestellung durchgebogen, wobei der Mittelbereich des Achsrohrs 3' wieder seine mittellängsachsennahe Endlage in der Lagerschelle 25a einnimmt. Da der Sonnenblendenkörper 2' in den Stellungen seines Gebrauchsschwenkbereiches stärker durchgebogen ist als in der Ruhestellung, weist er demnach hier auch die kürzeste Lagerlänge auf, wobei das Minimum in einer um 90° aus der Zwischenstellung abgewinkelten Blendschutzstellung vorliegt. Dieser Umstand ist durch einen konstruktiv festzulegenden Verschiebeweg auf dem Achsrohr 3' zu berücksichtigen Zur selbsttätigen Fixierung des Sonnenblendenkörpers 2' auf dem Achsrohr 3' über den Gebrauchsschwenkbereich gilt das zur Ruhestellung Gesagte analog.

Die am Strukturmodell anschaulich sichtbaren Vorgänge beim Verstellen des Sonnenblendenkörpers 2' entsprechen exakt denen bei der Verstellung des Sonnenblendenkörpers 2 auf der Achse 3 und sind daher nicht eigens erläutert.

**Patentansprüche**

1. Sonnenblende für Fahrzeuge, mit einem über seine Längserstreckung biegsamen Sonnenblendenkörper, der bei Bedarf aus einer Ruhestellung in eine Gebrauchsstellung schwenkbar und in diesen Stellungen gehalten ist, wobei zur karosserieseitigen Schwenklagerung des Sonnenblendenkörpers mindestens ein Lager vorgesehen ist, dessen sich entlang einer Längskante des Sonnenblendenkörpers erstreckende Lagerachsenlinie in einer zwischen der Ruhestellung und der Gebrauchsstellung liegenden Ebene in einer Bogenlinie verläuft, und wobei die beiden Endbereiche des Sonnenblendenkörpers auf einem zugeordneten Achsabschnitt drehgelagert sind,
**dadurch gekennzeichnet,**
daß der Sonnenblendenkörper (2) auf einer durchgehenden Achse (3) schwenkbar gelagert ist, daß er zwischen seinen drehgelagerten Endbereichen mittels eines in Richtung der breitenerstreckung des Sonnenblendenkörpers Verschiebbaren Zwischen Lagers drehgeführt ist, und daß der Sonnenblendenkörper (2) auf der Achse (3) längsverschiebbar geführt ist.

2. Sonnenblende nach Anspruch 1,
**dadurch gekennzeichnet,**
daß der Sonnenblendenkörper (2) an einer Lagerstelle axial auf der Achse (3) schiebegesichert ist.

3. Sonnenblende nach Anspruch 1 oder 2,
**dadurch gekennzeichnet,**
daß die durchgehende Achse (3) von einem Rohrkörper gebildet ist.

4. Sonnenblende nach Anspruch 1, 2 oder 3,
**dadurch gekennzeichnet,**
daß die Achse (3) über die Länge des Sonnenblendenkörpers (2) in diesen integriert ist.

5. Sonnenblende nach Anspruch 4,
**dadurch gekennzeichnet,**
daß im Sonnenblendenkörper (2) ein Führungsschacht (7) für die Achse (3) vorhanden ist, der sich von einem zylindrischen Querschnitt an den Austrittsenden der Achse (3) ausgehend zur Mitte des Sonnenblendenkörpers (2) hin zunehmend zu einem ovalen Schachtquerschnitt mit gleichbleibender lichter Höhe erweitert, wobei die gerundeten Wände des ovalen Schachtbereiches bezogen auf die Mittellängsebene des Führungsschachtes (7) spiegelsymmetrisch zueinander der Krümmung der Achse (3) entsprechend ausgebaucht sind.

6. Sonnenblende nach Anspruch 4 oder 5,
**dadurch gekennzeichnet,**
daß die Wände des Führungsschachtes (7) an eine biegeelastische Tragstruktur des Sonnenblendenkörpers (2) angeformt sind.

7. Sonnenblende nach Anspruch 6,
**dadurch gekennzeichnet,**
daß die Tragstruktur zwei im wesentlichen spiegelbildliche Halbschalen (11a, 11b) aus Kunststoff umfaßt, die flächig fügbar sind.

8. Sonnenblende nach Anspruch 1,
**dadurch gekennzeichnet,**
daß die Sonnenblende (1) als Gesamtheit aus ihrer Stellung hinter einer Windschutzscheibe (5) in eine etwa parallel zur zugeordneten Seitenscheibe (14) verlaufende Position überführbar ist.

9. Sonnenblende nach Anspruch 8,
**dadurch gekennzeichnet,**
daß ein über die Länge des Sonnenblendenkörpers (2) hinausstehendes Ende der Achse (3) mittels eines Gelenks (Scharniergelenk 15) karosserieseitig angeschlagen ist, und daß das zweite Ende der Achse (3) in seiner Stellung hinter der Windschutzscheibe (5) fixierbar ist.

10. Sonnenblende nach Anspruch 9,
**dadurch gekennzeichnet,**
daß zur Schwenkfixierung der Achse (3) eine Rasteinrichtung (17) vorgesehen ist.

11. Sonnenblende nach Anspruch 10,

EP 0 328 867 B1

**dadurch gekennzeichnet,**
daß die Rasteinrichtung (17) einen Rastdorn (20, 20a) umfaßt, der mit einer korrespondierenden Rastvertiefung (19) zusammenwirkt.

12. Sonnenblende nach Anspruch 11,
**dadurch gekennzeichnet,**
daß der Rastdorn (20,20a) am zweiten Ende der Achse (3) axial verschiebbar gelagert ist und gegen eine Federbelastung in eine dachrahmenfeste Rastvertiefung (19) einrastbar ist.

13. Sonnenblende nach einem oder mehreren der Ansprüche 8 bis 12,
**dadurch gekennzeichnet,**
daß die Achse (3) über die Länge des Sonnenblendenkörpers (2) einem Abschnitt eines Kreisbogens entsprechend gleichmäßig gekrümmt ist, und daß die Achse (3) aus mehreren, teleskopartig zusammenwirkenden Stangenelementen (3b,3c, 3d,3e) besteht.

14. Sonnenblende nach Anspruch 13,
**dadurch gekennzeichnet,**
daß ein Endabschnitt (3d,3e) eines ausziehbaren Stangenelements (3c) auf den Durchmesser des ihn führenden Stangenelements (3b) verdickt ist.

15. Sonnenblende nach Anspruch 13 oder 14,
**dadurch gekennzeichnet,**
daß zur Federbelastung des Rastdorns (20) in einer zylindrischen Führung eines Stangenelementes (3b) ein Druckfederelement (Schraubendruckfeder 21) angeordnet ist.

16. Sonnenblende nach einem oder mehreren der vorangegangenen Ansprüche,
**dadurch gekennzeichnet,**
daß der Durchmesser der Achse (3) geringer ist als die lichte Höhe des Führungschachtes (7), und daß die Achse (3) unter Vermittlung mehrerer, über die Länge des Sonnenblendenkörpers (2) verteilt angeordneter Elastomerringe (8, 9) in Höhenrichtung des Führungsschachtes (7) spielfrei zwischen den einander gegenüberliegenden Schachtwänden abgestützt ist.


**Claims**

1. A sun visor for vehicles, with a visor body flexible over its longitudinal extension which, when required, is swivellable from a rest position into an utilization position and is held in the said positions, there being provided for the pivot mounting on the body side of the sun visor body at least one bearing, the bearing axis line of which, extending along a longitudinal edge of the sun visor body runs in a bow line in a plane situated between the rest position and the utilization position, and the two end areas of the sun visor body being rotatably mounted on an associated portion of the axis,
characterized in that
the sun visor body (2) is pivotally mounted on a through axis (3), in that, between its pivotally mounted end areas, it is rotatably guided by means of an intermediate bearing movable in the direction of the width extension of the sun visor body, and in that the sun visor body (2) is longitudinally movably guided on the axis (3).

2. A sun visor according to claim 1,
characterized in that
the sun visor body (2) is secured against sliding movement axially on the axis (3) in a mounting position.

3. A sun visor according to either claim 1 or 2,
characterized in that
the through axis (3) is constituted by a tubular body.

4. A sun visor according to claim 1, 2 or 3,
characterized in that
the axis (3), along the length of the sun visor body (2), is integrated in the latter.

5. A sun visor according to claim 4,
characterized in that
in the sun visor body (2) a guiding shaft (7) is provided for the axis (3), said shaft widening increasingly from a cylindrical cross-section at the outlet ends of the axis (3) towards the centre of the sun visor body (2) into an oval shaft cross-section with head clearance remaining the same, the rounded walls of the oval shaft region, with respect to the central longitudinal plane of the guide shaft (7) being symmetrically bulged respectively to each other correspondingly to the curvature of the axis (3).

6. A sun visor according to either claim 4 or 5,
characterized in that

7

EP 0 328 867 B1

the walls of the guiding shaft (7) are formed on a flexibly elastic supporting structure of the sun visor body (2).

7. A sun visor according to claim 6,
characterized in that
the supporting structure comprises two half bowls (11a, 11b) of plastic material disposed in mirror fashion which can be joined together on a level plane.

8. A sun visor according to claim 1,
characterized in that
the sun visor (1) can be transferred as a whole unit from its position behind a windscreen (5) into a position extending substantially parallel with the associated side pane (14).

9. A sun visor according to claim 8,
characterized in that
an end of the axis (3) standing out over the length of the sun visor body (2) is held on the car body side by means of a joint (hinge joint 15), and in that the second end of the axis (3) can be fixed in its position behind the windscreen (5).

10. A sun visor according to claim 9,
characterized in that
a locking device (17) is provided for the swivelling fixing of the axis (3).

11. A sun visor according to claim 10,
characterized in that
the locking device (17) comprises a locking pin (20, 20a) which cooperates with a corresponding locking recess (19).

12. A sun visor according to claim 11,
characterized in that
the locking pin (20, 20a) is axially movably mounted on the second end of the axis (3) and is latchable against spring loading into a locking recess (19) rigidly provided in the roof frame.

13. A sun visor according to one or more of claims 8 to 12,
characterized in that
the axis (3) over the length of the sun visor body (2) is evenly curved corresponding to a portion of an arc of a circle, and in that the axis (3) is made up of several telescopically cooperating rod elements (3b, 3c, 3d, 3e).

14. A sun visor according to claim 13,
characterized in that
an end portion (3d, 3e) of an extractable rod element (3c) is thickned to the diameter of the rod element (3b) which guides it.

15. A sun visor according to either claim 13 or 14,
characterized in that
a pressure spring element (helical pressure spring 21) is mounted in a cylindrical guide of a rod element (3b) for the spring-loading of the locking pin (20).

16. A sun visor according to one or more of the foregoing claims,
characterized in that
the diameter of the axis (3) is smaller than the head clearance of the guiding shaft (7), and in that the axis (3), recourse being had of several elastomerinc rings (8, 9) distributed at intervals over the length of the sun visor body (2), is supported without play in the upward direction of the guiding shaft (7) between the oppositely situated walls of the shaft.

**Revendications**

1. Pare-soleil pour véhicules, comportant un corps flexible sur son étendue longitudinale et qui, en cas de besoin, peut être déplacé par pivotement d'une position de repos dans une position de service et être maintenu dans lesdites positions, le corps du pare-soleil étant maintenu de façon pivotante du côté de la carrosserie dans au moins un palier dont la ligne axiale, s'étendant le long d'un bord longitudinal du corps du pare-soleil, est située avec un profil incurvé dans un plan placé entre la position de repos et la position de service, les deux zones extrêmes du corps du pare-soleil étant montées de façon tournante sur une partie axiale associée, caractérisé en ce que

le corps (2) du pare-soleil est monté de façon pivotante sur un axe traversant (3), en ce qu'il est guidé en rotation, entre ses zones extrêmes montées de façon tournante, au moyen d'un palier intermédiaire déplaçable dans le sens de la largeur du corps du pare-soleil et en ce que le corps (2) du pare-soleil est guidé en translation longitudinale sur l'axe (3).

8

2. Pare-soleil selon la revendication 1,

caractérisé en ce que

le corps (2) du pare-soleil est arrêté dans sa translation axiale sur l'axe (3) en une zone d'appui.

3. Pare-soleil selon une des revendications 1 ou 2,

caractérisé en ce que

l'axe traversant (3) est constitué par un corps tubulaire.

4. Pare-soleil selon la revendication 1, 2 ou 3,

caractérisé en ce que

l'axe (3) est intégré, sur la longueur du corps (2) du pare-soleil, dans ledit corps.

5. Pare-soleil selon la revendication 4,

caractérisé en ce

qu'il est prévu dans le corps (2) du pare-soleil un évidement (7) de guidage pour l'axe (3), qui s'élargit, à partir d'une section cylindrique existant aux extrémités de sortie de l'axe (3), progressivement en direction du milieu du corps (2) du pare-soleil jusqu'à une zone ovale de l'évidement ayant une hauteur libre constante, les parois arrondies de la zone ovale de l'évidement étant bombées, en correspondance à la courbure de l'axe (3), mutuellement symétriquement par rapport au plan longitudinal central de l'évidement de guidage (7).

6. Pare-soleil selon la revendication 4 ou 5,

caractérisé en ce que

les parois de l'évidement de guidage (7) sont formées sur une structure portante élastique et flexible du corps (2) du pare-soleil.

7. Pare-soleil selon la revendication 6,

caractérisé en ce que

la structure portante se compose de deux demi-coquilles (11a, 11b), en matière plastique, sensiblement symétriques et pouvant être jointes à plat.

8. Pare-soleil selon la revendication 1,

caractérisé en ce que

le pare-soleil (1) peut être transféré en totalité depuis sa position située en arrière d'un pare-brise (5) jusque dans une position orientée à peu près parallèlement à une glace latérale associée (14).

9. Pare-soleil selon la revendication 8, caractérisé en ce qu'une extrémité de l'axe (3), qui fait saillie sur la longueur du corps (2) du pare-soleil, est maintenue du côté de la carrosserie au moyen d'une articulation (articulation en charnière 15) et en ce que la seconde extrémité de l'axe (3) peut être bloquée dans sa position en arrière du pare-brise (5).

10. pare-soleil selon la revendication 9,

caractérisé en ce

qu'il est prévu un dispositif d'arrêt (17) pour la fixation en pivotement de l'axe (3).

11. Pare-soleil selon la revendication 10,

caractérisé en ce que

le dispositif d'arrêt (17) comporte un têton d'arrêt (20, 20a) qui coopère avec un creux d'arrêt correspondant (19).

12. Pare-soleil selon la revendication 11,

caractérisé en ce que

le têton d'arrêt (20, 20a) est monté de façon à pouvoir coulisser axialement à la seconde extrémité de l'axe (3) et peut être bloqué, en opposition à une sollicitation par ressort, dans un creux d'arrêt (19) solidaire du châssis de toit.

13. Pare-soleil selon une ou plusieurs des revendications 8 à 12,

caractérisé en ce que

l'axe (3) est incurvé, sur la longueur du corps (2) du pare-soleil, uniformément en correspondance à une partie d'un arc de cercle et en ce que l'axe (3) se compose de plusieurs éléments de tige (3b,3c,3d,3e) coopérant de façon télescopique.

14. Pare-soleil selon la revendication 13,

caractérisé en ce

qu'une partie extrême (3d,3e) d'un élément de tige (3c) déployable, est augmentée en épaisseur jusqu'au diamètre de l'élément de tige (3b) assurant son guidage.

15. Pare-soleil selon la revendication 13 ou 14,

caractérisé en ce que,

pour une sollicitation par ressort du têton d'arrêt (20) dans un guide cylindrique d'un élément de tige (3b), il est prévu un élément formant ressort de pression (ressort hélicoïdal de pression 21).

16. Pare-soleil selon une ou plusieurs des revendications précédentes,

caractérisé en ce que

le diamètre de l'axe (3) est plus petit que la hauteur libre de l'évidement de guidage (7) et en ce que l'axe (3) est maintenu sans jeu, dans le sens de la hauteur de l'évidement de guidage (7) et entre les parois mutuellement opposées de l'évidement, au moyen de plusieurs bagues (8, 9) en matière élastomère qui sont réparties sur la longueur du corps (2) du pare-soleil.

Fig. 1

Fig. 2

Fig. 3

Fig. 4

Fig. 5

Fig.6

Fig.7

*Fig. 8*

*Fig. 9*

*Fig. 10*

*Fig. 11*

*Fig. 12*

*Fig. 13*